# EUROPEAN PATENT SPECIFICATION

(11) **EP 3 740 730 B1**
(45) Date of publication and mention of the grant of the patent: **11.09.2024**
(21) Application number: 18900752.9
(22) Date of filing: 10.05.2018
(51) Int. Cl.: F27B 1/12, F27D 3/15, F27D 1/12, C21C 5/52, F27B 3/10, F27B 3/24, F27D 1/00, F27D 1/16

(54) **FURNACE SIDEWALL WITH SLAG RETAINERS**
OFENSEITENWAND MIT SCHLACKENHALTERN
PAROI LATÉRALE DE FOUR DOTÉE D'ÉLÉMENTS DE RETENUE DE LAITIER

(30) Priority: 18.01.2018 US 201815874349
(43) Date of publication of application: 25.11.2020
(73) Proprietor: Systems Spray-Cooled, Inc., Smyrna, Tennessee 37167 (US)
(72) Inventor: FERGUSON, Scott A., Smyrna, Tennessee 37167 (US); WARD, Troy D., Smyrna, Tennessee 37167 (US); WILSON, Logan, Smyrna, Tennessee 37167 (US); CHODL, Eric, Smyrna, Tennessee 37167 (US)
(74) Representative: Groth & Co. KB
(86) International application number: PCT/US2018/032146
(87) International publication number: WO 2019/143376

(56) References cited:
- EP-B1- 1 413 174
- FR-A1- 2 459 436
- KR-B1- 101 719 131
- US-A- 4 119 792
- US-A- 4 423 513
- US-A- 4 423 513
- US-A- 4 455 017
- US-A- 4 815 096
- US-A- 5 290 016
- US-A- 5 290 016
- US-A1- 2004 240 510

## Description

### BACKGROUND OF THE DISCLOSURE

### Field of the Disclosure

Embodiments of the present disclosure relates generally to a sidewall for a metallurgical furnace, and more particularly to a furnace sidewall having slag retainers and metallurgical furnaces having the same.

### Description of the Related Art

Metallurgical furnaces (e.g., an electric arc furnace or a ladle metallurgical furnace) are used in the processing of molten metal materials. The electric arc furnace heats charged metal in the furnace by means of an electric arc from a graphite electrode. The electric current from the electrode passes through the charged metal material forming a molten bath of the metal materials. The furnaces house the molten materials during the processing of the molten materials forming molten steel and slag (a stony waste material).

A metallurgical furnace as above described is typically made of steel, aluminum, aluminum base alloys, copper, copper base alloys and metals having similar thermal characteristics and have metal slag retainers, made from the aforesaid metals attached to the furnace side of the metal closure elements. Examples of metallurgical furnaces with slag retainers are described for example in patent documents US 5 290 016 A, KR 101 719 131 B1, US 4 423 513 A, US 4 119 792 A, FR 2 459 436A1, and US 4 455 017 A. These slag retainers, typically cup-shaped to aid in slag retention and being unprotected from the high furnace temperatures, have a relatively short life due to overheating and oxidation. The use of the more oxidation resistant and thermally conductive materials in the slag retainers would result in substantially higher cost without commensurate benefit. The furnace must be shut down to replace or install new slag retainers, which is often down with refurbishing the sidewall of the furnace. Thus, replacing slag retainers is a costly endeavor.

Therefore, there is a need for an improved a furnace sidewall having slag retainers and metallurgical furnaces having the same.

### SUMMARY

The present invention is defined as set out in the appended independent claims. Embodiments of the invention are defined as set out in the appended dependent claims. A furnace sidewall having slag retainers and metallurgical furnaces having the same are disclosed herein. In one embodiment, a furnace sidewall comprises a hot plate having an inner surface facing configured to face an interior volume of a metallurgical furnace and a bottom surface configured to face a hearth of the metallurgical furnace. The furnace sidewall further comprises a plurality of slag retainers extending inwardly from the inner surface of the hot plate, the plurality of slag retainers arranged in a macro-pattern of slag retainer groups. The slag retainer groups comprise at least two or more of the slag retainers arranged in a micro-pattern. Each slag retainer of a common slag retainer group comprising the micro-pattern is a rectangular steel stud welded to the inner surface of the hot plate, wherein the rectangular steel studs of the common slag retainer group spaced apart from one another defining gaps therebetween. At least two of the rectangular steel studs within the common slag retainer group have different orientations, wherein the gaps defined between the rectangular steel studs of the common slag retainer group are smaller than a distance between adjacent groups of slag retainers, and wherein each slag retainer group comprises two side rectangular steel studs and a bottom rectangular steel stud arranged in a cup or horse-shoe shape which is open to a top of the furnace sidewall. Each side rectangular steel stud includes a major surface that is diagonally oriented. The bottom rectangular steel stud includes a major surface that is coplanar with a horizontal axis. A funnel shaped opening is provided between the side rectangular steel studs of each group.

In another embodiment, a furnace sidewall comprises a ring-shaped steel hot plate having an inner surface facing inward. The furnace sidewall comprises a plurality of slag retainers welded to the inner surface of the hot plate, wherein the slag retainers projecting inward from the inner surface. The plurality of slag retainers are arranged in a pattern of discrete slag retainer groups. The slag retainer groups have a substantially similar micro-pattern comprised of at least two spaced apart slag retainers of the plurality of slag retainers. Each of the two spaced apart slag retainers is a rectangular steel stud having different geometric orientations. The two spaced apart rectangular steel studs of the common slag retainer group define a gap therebetween that is smaller than a distance between adjacent groups of slag retainers, wherein each slag retainer group comprises two side rectangular steel studs and a bottom rectangular steel stud arranged in a cup or horse-shoe shape which is open to a top of the furnace sidewall. Each side rectangular steel stud includes a major surface that is diagonally oriented. The bottom rectangular steel stud includes a major surface that is coplanar with a horizontal axis. A funnel shaped opening is provided between the side rectangular steel studs of each group.

In yet another embodiment, a metallurgical furnace is provided. The metallurgical furnace comprises a hearth. The metallurgical furnace comprises a sidewall disposed on the hearth and surrounding an interior volume of the metallurgical furnace. The sidewall comprises a hot plate having an inner surface facing the interior volume. The sidewall comprises a cover plate surrounding the hot plate in a spaced-apart relation. The sidewall comprises a plurality of spray nozzles disposed in a volume defined between the cover plate and hot plate, the spray nozzles oriented to spray a liquid on the hot plate. The sidewall comprises a plurality of slag retainers welded to the inner surface of the hot plate, the slag retainers projecting inward from the inner surface. The plurality of slag retainers are arranged in a pattern of discrete slag retainer groups. At least two of the slag retainer groups have a substantially similar micro-pattern comprised of at least two spaced apart slag retainers of the plurality of slag retainers. Each of the two spaced apart slag retainers is a rectangular steel stud having different geometric orientations. The two spaced apart rectangular steel studs of the common slag retainer group define a gap therebetween that is smaller than a distance between adjacent groups of slag retainers, wherein each slag retainer group comprises two side rectangular steel studs and a bottom rectangular steel stud arranged in a cup or horse-shoe shape which is open to a top of the sidewall. Each side rectangular steel stud includes a major surface that is diagonally oriented. The bottom rectangular steel stud includes a major surface that is coplanar with a horizontal axis. A funnel shaped opening is provided between the side rectangular steel studs of each group.

### BRIEF DESCRIPTION OF THE DRAWINGS

So that the way the above recited features of the present disclosure can be understood in detail, a more particular description of the disclosure, briefly summarized above, may be had by reference to embodiments, some of which are illustrated in the appended drawings. It is to be noted, however, that the appended drawings illustrate only typical embodiments of this disclosure and are therefore not to be considered limiting of its scope, for the disclosure may admit to other equally effective embodiments.
Figure 1 illustrates an elevational side view of a metallurgical furnace.
Figure 2 illustrates a partial horizontal sectional view the sidewall of the metallurgical furnace of Figure 1.
Figures 3-10 are schematic elevation views of various patterns of slag retainers, which may be utilized on the sidewall illustrated in Figure 2.
Figures 11A-11D are schematic partial cross-sectional views depicting a method for fixing the metallic structures to the inner surface of the hot plate to form the micro-patterns and the macro-patterns described in Figures 3-5.

To facilitate understanding, identical reference numerals have been used, where possible, to designate identical elements that are common to the figures. It is contemplated that elements disclosed in one embodiment may be beneficially utilized with other embodiments without specific recitation.

### DETAILED DESCRIPTION

The present invention is directed to a furnace sidewall having slag retainers and metallurgical furnaces having the same. The sidewall of the metallurgical furnace includes a spray-cooled hot plate that faces the interior of the furnace. Slag retainers are disposed on the hot plate. The slag retainers enhance the ability of the hot plate to hold and retain slag on the surface of the sidewall facing the interior of the furnace. The retained slag functions to insulate and protect the hot plate, thereby extending the service life of the hot plate. Groups of slag retainers are arranged in a macro-pattern across the surface of the hot plate. The slag retainers comprising each group are arranged in a micro-pattern that includes at least two slag retainers. The micro-pattern is repetitive across the macro-pattern. While not detailed herein, a macro slag retainer pattern comprising micro-patterns of slag retainers may also be provided on an inner surface of a hot plate of other spray-cooled components utilized in the furnace, such as a spray-cool roof that is disposed on the sidewall.

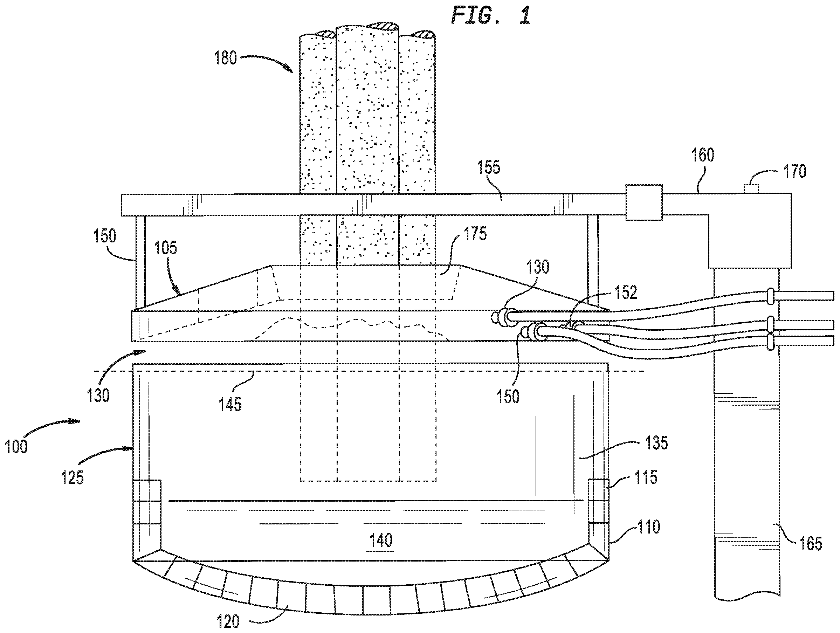

Figure 1 illustrates an elevational side view of a metallurgical furnace 100 having a spray-cooled roof 105 removably disposed on a furnace body 110. The body 110 includes a spray-cooled sidewall 125 disposed on a hearth 115. The hearth 115 is lined with refractory brick 120. The sidewall 125 has a top 130. The spray-cooled roof 105 is moveably disposed on the top 130 of the sidewall 125. The spray-cooled roof 100 and furnace body 110 enclose an interior volume 135 of the metallurgical furnace 100. The interior volume 135 may be loaded or charged with material 140, e.g., metal, scrap metal, or other meltable material, which is to be melted within the metallurgical furnace 100.

The metallurgical furnace 100, including the body 110 and the spray-cooled roof 105, is rotatable along a tilt axis 145. The metallurgical furnace 100 may be tilted in a first direction about the tilt axis 145 toward the slag door (not shown) multiple times during a single batch melting process, sometimes referred to as a "heat", to remove slag. Similarly, the metallurgical furnace 100 may be tilted in a second direction about the tilt axis 145 towards a tap spout (not shown) multiple times during a single batch melting process including one final time to remove the molten material 140.

Roof lift members 150 may be attached at a first end to the spray-cooled roof 105. The roof lift members 150 may be chains, cables, ridged supports, or other suitable mechanisms for supporting the spray-cooled roof 105. The roof lift members 150 may be attached at a second end to one or more mast arms 155. The mast arms 155 extend horizontally and spread outward from a mast support 160. The mast support 160 may be supported by a mast post 165. A coupling 170 may attach the mast post 165 to the mast support 160. The mast support 160 may rotate about the coupling 170 and the mast post 165. Alternately, the mast post 165 may rotate with the mast support 160 for moving the roof lift members 150. In yet other examples, roof lift members 150 may be aerially supported to move the spray-cooled roof 105. The spray-cooled roof 105 may be configured to swing or lift away from the sidewall 125. The spray-cooled roof 105 is lifted away from the sidewall 125 to expose the interior volume 135 of the metallurgical furnace 100 through the top 130 of the sidewall 125 for loading material therein.

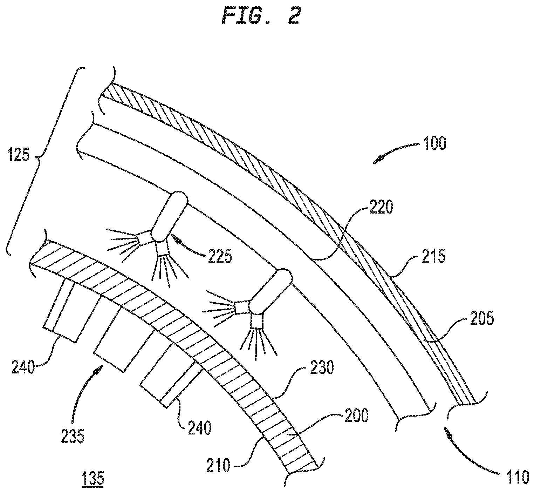

At least the sidewall 125 of the body 110 may be ring, oval or circular-shaped when viewed from a top plan view, of which a portion is shown in Figure 2. Likewise, the spray-cooled roof 105 a shape complimentary to that of the sidewall 125 so that the interior volume 135 may be enclosed.

A central opening 175 may be formed through the spray-cooled roof 105. Electrodes 180 extend through the central opening 175 from a position above the spray-cooled roof 105 into the interior volume 135. During operation of the metallurgical furnace 100, the electrodes 180 are lowered through the central opening 175 into the interior volume 135 of the metallurgical furnace 100 to provide electric arc-generated heat to melt the material 140.

The spray-cooled roof 105 may further include an exhaust port to permit removal of fumes generated within the interior volume 135 of the metallurgical furnace 100 during operation.

Figure 2 illustrates a partial horizontal sectional view of the sidewall 125 of the metallurgical furnace 100 of Figure 1. The sidewall 125 comprises a hot plate 200 and a cover plate 205, both of which are shown in cross-section in Figure 2. The hot plate 200 is coupled in a spaced apart relation to the cover plate 205. Like the sidewall 125, the hot plate 200 and the cover plate 205 have a ring, oval or circular-shape, a section of which is shown in Figure 2. The hot plate 200 is fabricated from steel or other suitable material. An inner surface 210 of the hot plate 200 faces the interior volume 135 of the metallurgical furnace 100 (shown in Figure 1) and an outer surface 215 of the cover plate 205 faces ambient environment where the metallurgical furnace 100 is utilized.

A manifold 220 is provided in the volume between the cover plate 205 and the hot plate 200. A plurality of nozzles 225 are coupled to the manifold 220. Liquid, such as water, is provided through the manifold 220 to the nozzles 225 such that the liquid may be sprayed through the nozzles 225 onto an outer surface 230 of the hot plate 200. The liquid is utilized to cool the hot plate 200 during operation of the metallurgical furnace 100 to prevent damage to the sidewall 125.

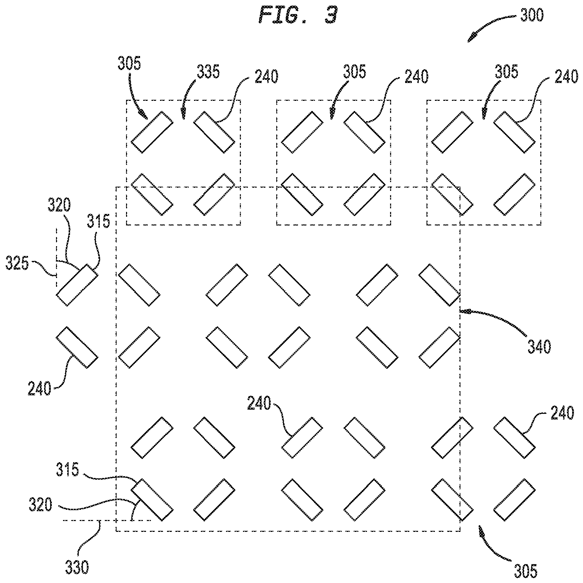

A plurality of slag retainers 240 are coupled to the inner surface 210 of the hot plate 200. The plurality of slag retainers 240 are arranged in a pattern 235. The pattern 235 generally includes a repetitive micro-pattern, where the micro-pattern includes at least two slag retainers 240 of the plurality of slag retainers 240 that have different geometric orientations, as further discussed below with reference to Figures 3-5. However, the pattern 235 may alternatively comprise a repetitive pattern of capacitively discharge welded high aspect ratio slag retainers 240. A high aspect ratio slag retainers 240 is one that has a height at least 2, for example 3 to 4, times the mean width of the surface of the slag retainer 240 that is welded to the hot plate 200. The slag retainers 240 project from the inner surface 210 of the hot plate 200 into the interior volume 135 of the metallurgical furnace 100. The pattern 235 of the slag retainers 240 is configured to trap slag produced by a batch melting process in the metallurgical furnace 100 so that the slag retained to the hot plate 200 by the slag retainers 240 functions to insulate the hot plate 200 from the heat generated in the interior volume 135 of the metallurgical furnace 100 during operation of the furnace 100.

While the pattern 235 of slag retainers 240 are described in Figure 2 as being provided on the inner surface 210 of the hot plate 200, the pattern 235 of slag retainers 240 may also be provided on an inner surface of a hot plate of the spray-cooled roof 105 of Figure 1.

Figures 3-10 are schematic elevation views of various patterns of slag retainers, which may be utilized as the pattern 235 of Figure 2. The patterns of at least Figures 3-5 generally include a macro-pattern made up of groups of slag retainers having a repetitive micro-pattern. It is contemplated that other patterns may be utilized.

In an unclaimed embodiment, Figure 3 shows a macro-pattern 300 of slag retainer groups 305. Each slag retainer groups 305 includes at least two slag retainers 240. Some of the groups 305 illustrated in Figure 3 are bounded by a dashed line to better illustrate the discrete repetitive nature of the groups 305 within the overall pattern of the macro-pattern 300. The slag retainers 240 comprising each group 305 are arranged in micro-pattern. Each group 305 of slag retainers 240 comprising the macro-pattern 300 include at least two slag retainers 240 having different geometric orientations. Adjacent groups 305 of slag retainers 240 of the macro-pattern 300 may have slag retainers 240 arranged in a substantially same micro-pattern that repeat over the inner surface 210 of the hot plate 200. Alternatively, the micro-pattern of one group 305 may include slag retainers 240 arranged in a geometric pattern that is different than a micro-pattern of another group 305 of slag retainers 240 comprising the macro pattern 300. In yet another example, the micro-pattern of one group 305 may include more slag retainers 240 than a micro-pattern of another group 305 of slag retainers 240 comprising the macro pattern 300.

Each slag retainer 240 is a steel stud. The steel stud has a rectangular cross-section and a height (the height extending out of the page). In another example, the steel stud may have a circular, oval or other cross-sectional profile. In one example the steel stud has a high aspect ratio in that the height of the stud is at least 2 times, such as 3 to 4, greater than the average width of the rectangular cross-section.

The space between each of the slag retainers 240 comprising a common group 305 is less than a space between neighboring groups 305 such that the discrete identification of the individual groups 305 is readily apparent. However, the spacing between slag retainers 240 comprising a common group 305 may be substantially equal to the space between neighboring groups 305.

The slag retainers 240 comprising an individual group 305 may be arranged in a wave, spiral, curve, linear, off-set, polygonal, quadrilateral, triangular, truncated triangle, letter-shaped (e.g., C, L, T, S, U, X, V, and W, among others) or other geometrical orientation. Quadrilateral shapes include rectangle, square, trapezoid, diamond and the like. At least two slag retainers 240 of the same group 305 have a different geometric orientation. Alternatively or in addition, one or more retainers 240 of the same group 305 have a common geometric orientation. In one example, each slag retainer 240 of a common group 305 is separated by a space or gap.

In the unclaimed embodiment depicted in Figure 3, each group 305 of slag retainers 240 includes four slag retainers 240 arranged in a diamond orientation. For example, each of the slag retainers 240 includes a major surface 315 that is diagonally oriented, for example at an angle 320 of about 45 degrees from a vertical axis 325 or a horizontal axis 330. The vertical axis 325 is generally aligned in the same direction as the central vertical axis of the sidewall 125. Each slag retainer 240 within a common group 305 is spaced to form a gap 335 the neighboring slag retainer 240 the common group 305 of slag retainers 240. A dashed box 340 shown in Figure 3 represents a square foot, and the macro-pattern 300 comprises approximately 24 slag retainers 240 per square foot, although the density of slag retainers 240 may be different or even vary within the pattern 300.

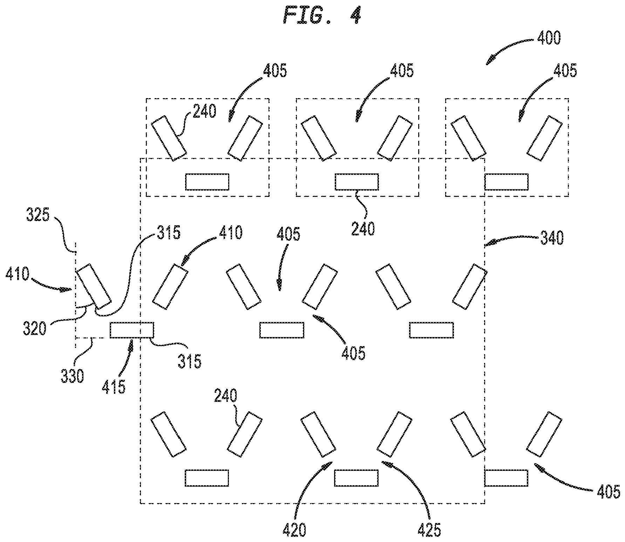

Figure 4 shows a macro-pattern 400 comprising a plurality of groups 405 of slag retainers 240. Each group 405 of the slag retainers 240 comprising the macro-pattern 400 includes at least two slag retainers 240 that are fixed to the inner surface 210 of the hot plate 200 (as shown in Figure 2). The groups 405 comprising the macro-pattern 400 may include slag retainers 240 having substantially the same geometric orientation of slag retainers 240 that repeat over the inner surface 210 of the hot plate 200. Alternatively, some or all the groups 405 comprising the macro-pattern 400 may include slag retainers 240 having different geometric orientations of slag retainers 240. According to the invention and as depicted in Figure 4, each group 305 of slag retainers 240 includes at least three slag retainers 240 arranged in a cup or horse-shoe shape which is open to the top of the sidewall 125. Each group 405 of slag retainers 240 comprises two side plates 410 and a bottom plate 415. Each side plate 410 includes a major surface 315 that is diagonally oriented, for example at an angle 320 of about 45 degrees from a vertical axis 325. Each of the bottom plates 415 includes a major surface 315 that is coplanar with a horizontal axis 330. Each of the slag retainers 240 is spaced to form two gaps 420 between the bottom plate 415 and the side plates 410 within each group 405. A funnel shaped opening 425 is provided between the side plates 410 of each group 405. A dashed box 340 shown in Figure 4 represents a square foot, and the macro-pattern 400 of slag retainers 240 comprises approximately 17 slag retainers 240 per square foot, although the density of slag retainers 240 may be different or even vary within the pattern 300.

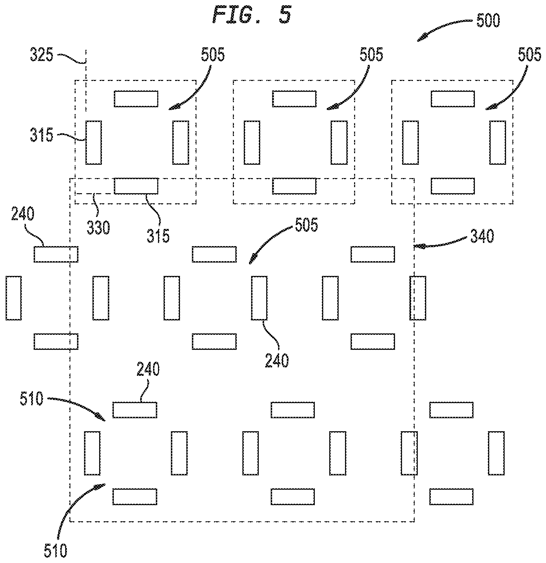

In an unclaimed embodiment, Figure 5 shows a macro-pattern 500 of slag retainers 240 comprising a plurality of groups 505. Each group 505 of slag retainers 240 comprise a plurality of slag retainers 240 that are fixed to the inner surface 210 of the hot plate 200 (as shown in Figure 2). The groups 505 comprising the macro-pattern 500 may include slag retainers 240 having substantially the same geometric orientation of slag retainers 240 that repeat over the inner surface 210 of the hot plate 200. Alternatively, some or all the groups 505 comprising the macro-pattern 500 may include slag retainers 240 having different geometric orientations of slag retainers 240.

Each of the groups 505 illustrated in Figure 5 comprises four slag retainers 240 in a rectangular or box shape. For example, each of the slag retainers 240 include a major surface 315 that is oriented along (e.g., an angle of about 0 relative to) a vertical axis 325 and a horizontal axis 330. Each of the slag retainers 240 is spaced to form four gaps 510 within each group 505. A dashed box 340 shown in Figure 5 represents a square foot, and the macro-pattern 500 of slag retainers 240 comprises approximately 20 slag retainers 240 per square foot, although the density of slag retainers 240 may be different or even vary within the pattern 300.

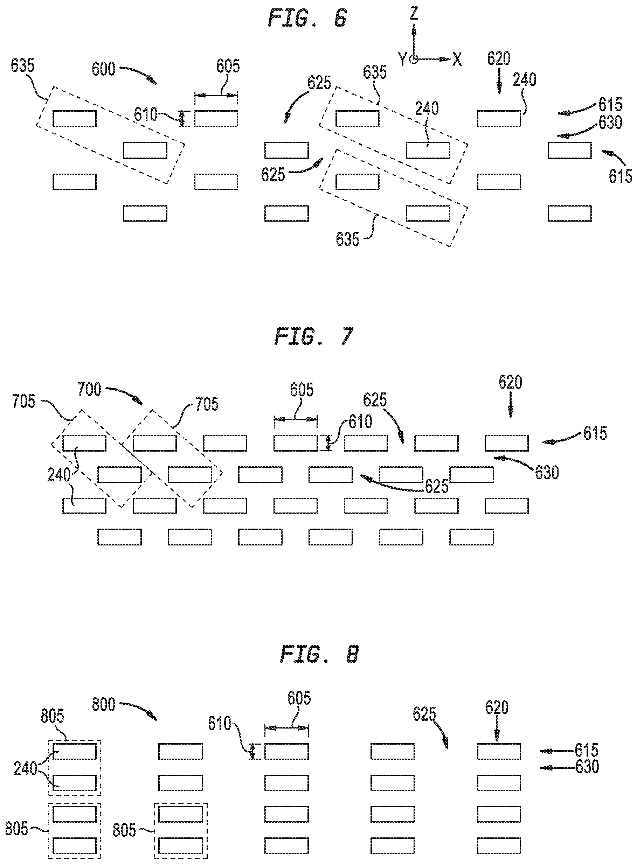

In an unclaimed embodiment, Figure 6 shows another pattern 600 comprising a plurality of slag retainers 240 in elevation view. Each of the slag retainers 240 include a rectangular cross-section and a height (the height extending out of the page). In this example, each of the slag retainers 240 includes a length 605 (along the Y-X plane) and a width 610 (along the Y-Z plane), and the length 605 is greater than the width 610. As described herein, the pattern 600 comprises a pattern of rows 615 staggered with respect to a pattern of columns 620 consisting of the slag retainers 240 such that vertical gaps 625 and lateral gaps 630 are formed between the slag retainers 240 in the columns 620 and the rows 615, respectively. One or both of the pattern of rows 615 and the pattern of columns 620 may be linear or non-linear. As described herein, the lateral gaps 630 correspond with the width 610 and the vertical gaps 625 correspond with the length 605 of an adjacent slag retainer 240. The pattern of rows 615 and/or the pattern of columns 620 may be a micro-pattern within the pattern 600 (e.g., a macro-pattern). For example, a micro-pattern 635 may include two or more diagonally oriented slag retainers 240.

In an unclaimed embodiment, Figure 7 shows another pattern 700 comprising a plurality of slag retainers 240 in elevation view. Each of the slag retainers 240 include a rectangular cross-section and a height (the height extending out of the page). In this example, each of the slag retainers 240 includes the length 605 (along the Y-X plane) and the width 610 (along the Y-Z plane), and the length 605 is greater than the width 610. As described herein, the pattern 700 comprises the pattern of rows 615 and a pattern of columns 620 consisting of the slag retainers 240 such that vertical gaps 625 and lateral gaps 630 are formed between the slag retainers 240 in the columns 620 and the rows 615, respectively. One or both of the pattern of rows 615 and the pattern of columns 620 may be linear or non-linear. As described herein, the lateral gaps 630 correspond with a fraction of the width 610 and the vertical gaps 625 correspond with the length 605 of an adjacent slag retainer 240. The pattern of rows 615 and/or the pattern of columns 620 may be a micro-pattern within the pattern 700 (e.g., a macro-pattern). In this example, a micro-pattern 705 may include two or more diagonally oriented slag retainers 240. The micro-pattern 705 differs from the micro-pattern 635 as the slag retainers 240 of the micro-pattern 705 at least partially overlap in the Z direction, whereas the slag retainers 240 of the micro-pattern 635 of Figure 6 do not.

In an unclaimed embodiment Figure 8 shows another pattern 800 comprising a plurality of slag retainers 240 in elevation view. Each of the slag retainers 240 include a rectangular cross-section and a height (the height extending out of the page). In this example, each of the slag retainers 240 includes the length 605 (along the Y-X plane) and the width 610 (along the Y-Z plane), and the length 605 is greater than the width 610. As described herein, the pattern 800 comprises a pattern of rows 615 aligned with respect to a pattern of columns 620 consisting of the slag retainers 240 such that vertical gaps 625 and lateral gaps 630 are formed between the slag retainers 240 in the columns 620 and the rows 615, respectively. One or both of the pattern of rows 615 and the pattern of columns 620 may be linear or non-linear. As described herein, the lateral gaps 630 correspond with the width 610 and the vertical gaps 625 are aligned. The lateral gaps 630 also correspond with the length 605 of an adjacent slag retainer 240. A micro-pattern 805 in Figure 8 may include two or more adjacent vertically oriented slag retainers 240. The micro-pattern 805 may repeat, as necessary, with thin the pattern 800 (e.g., a macro-pattern).

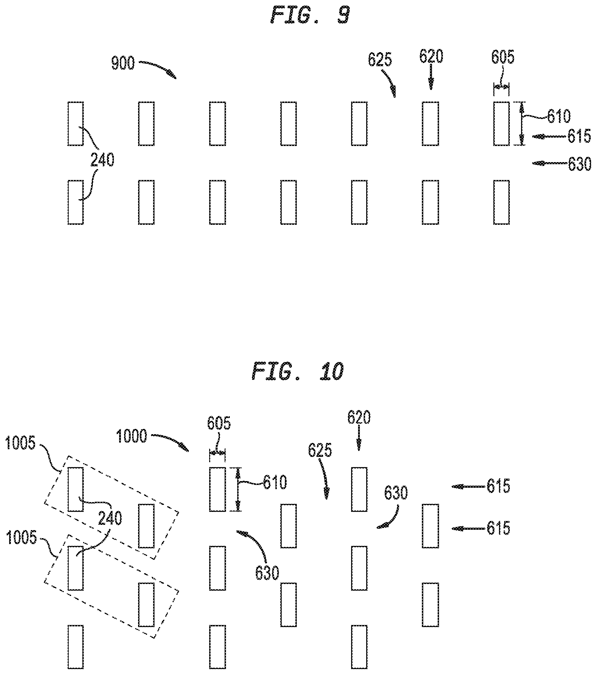

In an unclaimed embodiment, Figure 9 shows another pattern 800 comprising a plurality of slag retainers 240 in elevation view. Each of the slag retainers 240 include a rectangular cross-section and a height (the height extending out of the page). In this example, each of the slag retainers 240 includes the length 605 (along the Y-X plane) and the width 610 (along the Y-Z plane), and the width 610 is greater than the length 605. As described herein, the pattern 800 comprises a pattern of rows 615 aligned with respect to a pattern of columns 620 consisting of the slag retainers 240 such that vertical gaps 625 and lateral gaps 630 are formed between the slag retainers 240 in the columns 620 and the rows 615, respectively. One or both of the pattern of rows 615 and the pattern of columns 620 may be linear or non-linear. As described herein, the lateral gaps 630 correspond with a fraction of the width 610 and the vertical gaps 625 correspond with the length 605. Additionally, the vertical gaps 625 are aligned. The lateral gaps 630 also correspond with the length 605 of an adjacent slag retainer 240.

In an unclaimed embodiment, Figure 10 shows another pattern 1000 comprising a plurality of slag retainers 240 in elevation view. Each of the slag retainers 240 include a rectangular cross-section and a height (the height extending out of the page). In this example, each of the slag retainers 240 includes the length 605 (along the Y-X plane) and the width 610 (along the Y-Z plane), and the width 610 is greater than the length 605. As described herein, the pattern 800 comprises a pattern of rows 615 that are staggered with respect to a pattern of columns 620 consisting of the slag retainers 240 such that vertical gaps 625 and lateral gaps 630 are formed between the slag retainers 240 in the columns 620 and the rows 615, respectively. One or both of the pattern of rows 615 and the pattern of columns 620 may be linear or non-linear. As described herein, the lateral gaps 630 correspond with the width 610 and the vertical gaps 625 correspond with a fraction of the length 605. Additionally, the vertical gaps 625 are aligned while the lateral gaps 630 are staggered. A micro-pattern 1005 may include two or more diagonally oriented slag retainers 240.

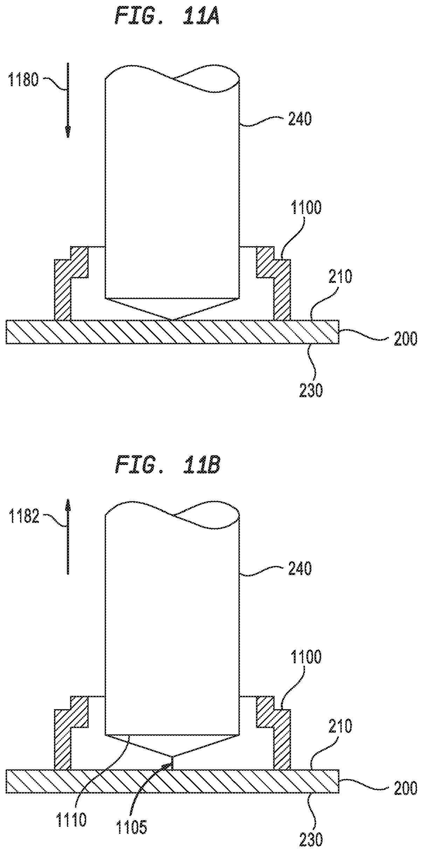

Figures 11A-11D are schematic partial cross-sectional views depicting a method for fixing the slag retainers 240 to the inner surface 210 of the hot plate 200 to form the micro-patterns and the macro-patterns described above, among other patterns. The method described in Figures 11A-11D is a capacitive discharge (CD) welding process but other joining processes may be utilized to fix the slag retainers 240 to the hot plate 200. Examples include brazing or arc welding processes, such as shielded metal arc welding (SMAW), flux-core arc welding (FCAW), gas metal arc welding (GMAW), gas tungsten arc welding (GTAW), among other welding processes.

In particular, the CD welding process is particularly efficient at welding the slag retainers 240 having high aspect ratios to the hot plate 200. Thus, the method described over the sequence illustrated in Figures 11A-D is particularly useful in fabricating new sidewalls, and rebuilding and refurbishing hotplates for reuse in sidewalls.

In Figure 11A, the slag retainer 240 is shown positioned on the inner surface 210 of the hot plate 200. A ceramic ferrule 1100 surrounds the slag retainer 240 and contacts the inner surface 210 of the hot plate 200. The slag retainer 240 may be supported by a stud welding gun (not shown) that urges the slag retainer 240 against the inner surface 210 of the hot plate 200 in a direction shown by arrow 1180 illustrated in Figure 11A.

Figure 11B, the stud welding gun is triggered. The stud welding gun has a lift mechanism that lifts the slag retainer 240 slightly away from the inner surface 210 of the hot plate 200 in a direction shown by arrow 1182 illustrated in Figure 11B when triggered. Additionally, the stud welding gun produces an electric arc 1105 between a tip of the slag retainer 240 and the inner surface 210 of the hot plate 200. The electric arc melts a base area 1110 of the slag retainer 240 and a portion of the inner surface 210 of the hot plate 200. The base area 1110 of the slag retainer 240 may be pointed or include a nub to enhance formation of the arc 1105.

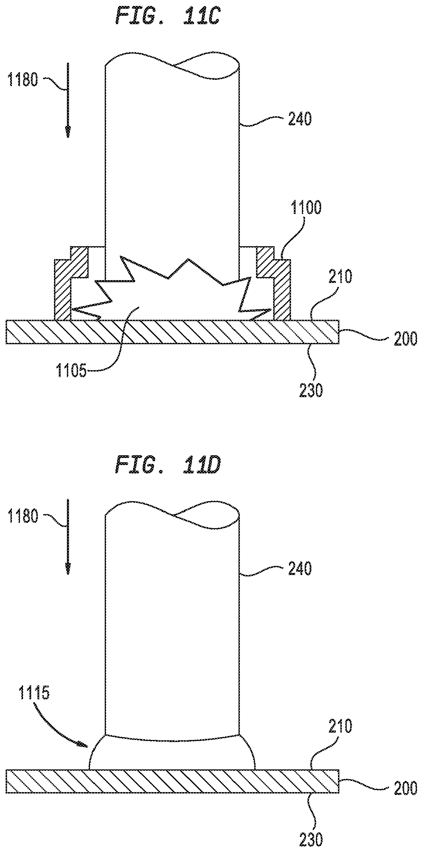

Figure 11C illustrates the arc 1105 which joins the slag retainer 240 to the inner surface 210 of the hot plate 200. A timer may stop the electrical current that produces the arc 1105. The ceramic ferrule 1100 concentrates the heat produced by the arc 1105. The ceramic ferrule 1100 also functions to contain the molten material in the weld area. The lift mechanism of the stud welding gun is also de-energized which causes the slag retainer 240 to plunge into the molten material in the direction of the arrow 1180 illustrated in Figure 11C.

Figure 11D shows the slag retainer 240 joined to the inner surface 210 of the hot plate 200 by a weld 1115. The weld 1115 is produced by the solidification of the molten material produced by the arc 1105 once the current to the slag retainer 240 is terminated. The ceramic ferrule 1100 is also removed from the slag retainer 240 in Figure 11D.

The process illustrated in Figures 11AD is be repeated to recreate groups of slag retainers arranged in micro-patterns that are part of a larger macro-pattern of slag retainers CD welded to the hot plate. The process illustrated in Figures 11A-D may also be utilized to replace one or more slag retainers in an existing macro-pattern, or to add additional slag retainers to existing groups or to create new groups of slag retainers in an existing macro-pattern.

The micro-patterns comprising the slag retainers 240 that form the macro slag retainer patterns as described above are less costly to manufacture as opposed to conventional slag retainer designs. The conventional slag retainers are typically complicated shapes that may not be compatible to CD welding processes. This makes the conventional slag retainers much more costly and time consuming to install. For example, one conventional slag retainer pattern includes a four-sided slag retainer structure that resembles a U shape or horseshoe shape in cross-section. In this particular pattern, there are approximately 10 slag retainer structures per square foot of hot plate (e.g., thousands of slag retainer structures per roof or sidewall). According to embodiments described herein, there are more slag retainers 240 per square foot to complete a good slag retainer coverage scheme, the slag retainers 240 can be installed at a rate of about 20 slag retainer studs per minute as compare to welding one conventional slag retainer structure, which takes several minutes.

While the foregoing is directed to embodiments of the present disclosure, other and further embodiments may be devised without departing from the basic scope thereof, and the scope thereof is determined by the claims that follow.

## Claims

1. A furnace sidewall (125) comprising:
a hot plate (200) having an inner surface (210) facing configured to face an interior volume (135) of a metallurgical furnace (100) and a bottom surface configured to face a hearth (115) of the metallurgical furnace; and
a plurality of slag retainers (240) extending inwardly from the inner surface of the hot plate, the plurality of slag retainers arranged in a macro-pattern (400) of slag retainer groups (405), the slag retainer groups comprising at least two or more of the slag retainers arranged in a micro-pattern, each slag retainer of a common slag retainer group comprising the micro-pattern is a rectangular steel stud welded to the inner surface of the hot plate, the rectangular steel studs of the common slag retainer group spaced apart from one another defining gaps therebetween, at least two of the rectangular steel studs within the common slag retainer group having different orientations, wherein the gaps defined between the rectangular steel studs of the common slag retainer group are smaller than a distance between adjacent groups of slag retainers, wherein each slag retainer group (405) comprises two side rectangular steel studs (410) and a bottom rectangular steel stud (415) arranged in a cup or horse-shoe shape which is open to a top of the furnace sidewall (125), wherein each side rectangular steel stud (410) includes a major surface that is diagonally oriented and the bottom rectangular steel stud (415) includes a major surface that is coplanar with a horizontal axis and a funnel shaped opening (425) is provided between the side rectangular steel studs (410) of each group.

2. The sidewall of claim 1, wherein a gap (335) is provided between each of the slag retainers comprising the micro-pattern.

3. The sidewall of claim 1 further comprising:
a cover plate (205) coupled to the hot plate (200) in a spaced-apart relation; and
a plurality of spray nozzles (225) disposed in a volume defined between the cover plate and hot plate, the spray nozzles oriented to spray liquid on the hot plate.

4. A furnace sidewall (125) comprising:
a ring-shaped steel hot plate (200) having an inner surface (210) facing inward; and
a plurality of slag retainers (240) welded to the inner surface of the hot plate, the slag retainers projecting inward from the inner surface, the plurality of slag retainers are arranged in a pattern of discrete slag retainer groups (405), the slag retainer groups having a substantially similar micro-pattern comprised of at least two spaced apart slag retainers of the plurality of slag retainers, the two spaced apart slag retainers each being a rectangular steel stud having different geometric orientations, the two spaced apart rectangular steel studs of the common slag retainer group defining a gap therebetween that is smaller than a distance between adjacent groups of slag retainers, wherein each slag retainer group (405) comprises two side rectangular steel studs (410) and a bottom rectangular steel stud (415) arranged in a cup or horse-shoe shape which is open to a top of the furnace sidewall (125), wherein each side rectangular steel stud (410) includes a major surface that is diagonally oriented and the bottom rectangular steel stud (415) includes a major surface that is coplanar with a horizontal axis and a funnel shaped opening (425) is provided between the side rectangular steel studs (410) of each group.

5. The sidewall of claim 4 further comprising:
another group of slag retainers having a micro-pattern different than the micro-pattern of slag retainers comprising the pattern of discrete slag retainer groups.

6. The sidewall of claim 4, where each of the slag retainers comprising the micro-pattern is capacitively discharge welded to the hot plate.

7. A metallurgical furnace (100), comprising:
a hearth (115); and
a sidewall (125) disposed on the hearth and surrounding an interior volume (135) of the metallurgical furnace, the sidewall comprising:
a hot plate (200) having an inner surface (210) facing the interior volume;
a cover plate (205) surrounding the hot plate in a spaced-apart relation;
a plurality of spray nozzles (225) disposed in a volume defined between the cover plate and hot plate, the spray nozzles oriented to spray a liquid on the hot plate; and
a plurality of slag retainers (240) welded to the inner surface of the hot plate, the slag retainers projecting inward from the inner surface, the plurality of slag retainers are arranged in a pattern of discrete slag retainer groups (405), at least two of the slag retainer groups having a substantially similar micro-pattern comprised of at least two spaced apart slag retainers of the plurality of slag retainers, the two spaced apart slag retainers each being a rectangular steel stud having different geometric orientations, the two spaced apart rectangular steel studs of the common slag retainer group defining a gap therebetween that is smaller than a distance between adjacent groups of slag retainers, wherein each slag retainer group (405) comprises two side rectangular steel studs (410) and a bottom rectangular steel stud (415) arranged in a cup or horse-shoe shape which is open to a top of the sidewall (125), wherein each side rectangular steel stud (410) includes a major surface that is diagonally oriented and the bottom rectangular steel stud (415) includes a major surface that is coplanar with a horizontal axis and a funnel shaped opening (425) is provided between the side rectangular steel studs (410) of each group.

8. The furnace of claim 7, where each of the slag retainers comprising the substantially similar micro-patterned groups is capacitively discharge welded to the hot plate.

9. The furnace of claim 7, wherein at least two groups of slag retainers have different micro-patterns.

## Patentansprüche

1. Ofenseitenwand (125), umfassend:
eine Heizplatte (200) mit einer Innenoberfläche (210), die so konfiguriert ist, dass sie einem Innenvolumen (135) eines metallurgischen Ofens (100) zugewandt ist, und einer Bodenfläche, die so konfiguriert ist, dass sie einem Herd (115) des metallurgischen Ofens zugewandt ist; und
eine Vielzahl von Schlackenrückhaltern (240), die sich von der Innenoberfläche der Heizplatte nach innen erstrecken, wobei die Vielzahl von Schlackenrückhaltern in einem Makromuster (400) von Schlackenrückhaltergruppen (405) angeordnet ist, wobei die Schlackenrückhaltergruppen mindestens zwei oder mehr der Schlackenrückhalter umfassen, die in einem Mikromuster angeordnet sind, wobei jeder Schlackenrückhalter einer gemeinsamen Schlackenrückhaltergruppe, die das Mikromuster umfasst, ein rechteckiger Stahlbolzen ist, der an die Innenoberfläche der Heizplatte geschweißt ist, wobei die rechteckigen Stahlbolzen der gemeinsamen Schlackenrückhaltergruppe voneinander beabstandet sind und Lücken dazwischen definieren, wobei mindestens zwei der rechteckigen Stahlbolzen innerhalb der gemeinsamen Schlackenrückhaltergruppe unterschiedliche Ausrichtungen aufweisen, wobei die Lücken, die zwischen den rechteckigen Stahlbolzen der gemeinsamen Schlackenrückhaltergruppe definiert sind, kleiner sind als ein Abstand zwischen benachbarten Gruppen von Schlackenrückhaltern, wobei jede Schlackenrückhaltergruppe (405) zwei seitliche rechteckige Stahlbolzen (410) und einen unteren rechteckigen Stahlbolzen (415) umfasst, die in einem becher- oder hufeisenförmig, die zu einer Oberseite der Ofenseitenwand (125) hin offen ist, wobei jeder seitliche rechteckige Stahlbolzen (410) eine Hauptoberfläche aufweist, die diagonal ausgerichtet ist, und der untere rechteckige Stahlbolzen (415) eine Hauptoberfläche aufweist, die koplanar mit einer horizontalen Achse ist, und wobei eine trichterförmige Öffnung (425) zwischen den seitlichen rechteckigen Stahlbolzen (410) jeder Gruppe vorgesehen ist.

2. Seitenwand nach Anspruch 1, wobei zwischen jedem der Schlackenrückhalter, die das Mikromuster bilden, ein Spalt (335) vorhanden ist.

3. Seitenwand nach Anspruch 1, ferner umfassend:
eine Abdeckplatte (205), die mit der Heizplatte (200) in einer beabstandeten Beziehung verbunden ist; und
eine Vielzahl von Sprühdüsen (225), die in einem zwischen der Abdeckplatte und der Heizplatte definierten Volumen angeordnet sind, wobei die Sprühdüsen so ausgerichtet sind, dass sie Flüssigkeit auf die Heizplatte sprühen.

4. Ofenseitenwand (125), umfassend:
eine ringförmige Stahlheizplatte (200) mit einer nach innen gerichteten Innenoberfläche (210); und
eine Vielzahl von Schlackenrückhaltern (240), die an die Innenoberfläche der Heizplatte geschweißt sind, wobei die Schlackenrückhalter von der Innenoberfläche nach innen vorstehen, wobei die Vielzahl von Schlackenrückhaltern in einem Muster von separaten Schlackenrückhaltergruppen (405) angeordnet ist, wobei die Schlackenrückhaltergruppen ein im Wesentlichen ähnliches Mikromuster aufweisen, das aus mindestens zwei voneinander beabstandeten Schlackenrückhaltern der Vielzahl von Schlackenrückhaltern besteht, wobei die beiden voneinander beabstandeten Schlackenrückhalter jeweils ein rechteckiger Stahlbolzen mit unterschiedlichen geometrischen Ausrichtungen sind, wobei die beiden voneinander beabstandeten rechteckigen Stahlbolzen der gemeinsamen Schlackenrückhaltergruppe einen Spalt zwischen sich definieren, der kleiner ist als ein Abstand zwischen benachbarten Gruppen von Schlackenrückhaltern, wobei jede Schlackenrückhaltergruppe (405) zwei seitliche rechteckige Stahlbolzen (410) und einen unteren rechteckigen Stahlbolzen (415) umfasst, die in einer becher- oder hufeisenförmigen Form angeordnet sind, die zu einer Oberseite der Ofenseitenwand (125) hin offen ist, wobei jeder seitliche rechteckige Stahlbolzen (410) eine Hauptfläche umfasst, die diagonal ausgerichtet ist, und der untere rechteckige Stahlbolzen (415) eine Hauptoberfläche aufweist, die in einer Ebene mit einer horizontalen Achse liegt, und zwischen den seitlichen rechteckigen Stahlbolzen (410) jeder Gruppe eine trichterförmige Öffnung (425) vorgesehen ist.

5. Seitenwand nach Anspruch 4, ferner umfassend:
eine weitere Gruppe von Schlackenrückhaltern, die ein anderes Mikromuster aufweisen als das Mikromuster der Schlackenrückhalter, das aus dem Muster separater Schlackenrückhaltergruppen besteht.

6. Seitenwand nach Anspruch 4, wobei jeder der Schlackenrückhalter, die das Mikromuster bilden, durch kapazitives Entladungsschweißen an die Heizplatte geschweißt wurde.

7. Metallurgischer Ofen (100), umfassend:
einen Herd (115); und
eine Seitenwand (125), die an dem Herd angeordnet ist und ein Innenvolumen (135) des metallurgischen Ofens umgibt, wobei die Seitenwand umfasst:
eine Heizplatte (200) mit einer dem Innenvolumen zugewandten Innenoberfläche (210);
eine Abdeckplatte (205), die die Heizplatte mit Abstand umgibt;
eine Vielzahl von Sprühdüsen (225), die in einem zwischen der Abdeckplatte und der Heizplatte definierten Volumen angeordnet sind, wobei die Sprühdüsen so ausgerichtet sind, dass sie eine Flüssigkeit auf die Heizplatte sprühen; und
eine Vielzahl von Schlackenrückhaltern (240), die an die Innenoberfläche der Heizplatte geschweißt sind, wobei die Schlackenrückhalter von der Innenoberfläche nach innen vorstehen, wobei die Vielzahl von Schlackenrückhaltern in einem Muster aus separaten Schlackenrückhaltergruppen (405) angeordnet ist, wobei mindestens zwei der Schlackenrückhaltergruppen ein im Wesentlichen ähnliches Mikromuster aufweisen, das aus mindestens zwei voneinander beabstandeten Schlackenrückhaltern der Vielzahl von Schlackenrückhaltern besteht, wobei die beiden voneinander beabstandeten Schlackenrückhalter jeweils ein rechteckiger Stahlbolzen mit unterschiedlichen geometrischen Ausrichtungen sind, wobei die beiden voneinander beabstandeten rechteckigen Stahlbolzen der gemeinsamen Schlackenrückhaltergruppe einen Spalt zwischen sich definieren, der kleiner ist als ein Abstand zwischen benachbarten Gruppen von Schlackenrückhaltern, wobei jede Schlackenrückhaltergruppe (405) zwei seitliche rechteckige Stahlbolzen (410) und einen unteren rechteckigen Stahlbolzen (415) umfasst, die in einer becher- oder hufeisenförmigen Form angeordnet sind, die zu einer Oberseite der Seitenwand (125) hin offen ist, wobei jeder seitliche rechteckige Stahlbolzen (410) eine Hauptoberfläche umfasst die diagonal ausgerichtet ist und bei der der untere rechteckige Stahlbolzen (415) eine Hauptoberfläche aufweist, die in einer Ebene mit einer horizontalen Achse liegt und bei der zwischen den seitlichen rechteckigen Stahlbolzen (410) jeder Gruppe eine trichterförmige Öffnung (425) vorgesehen ist.

8. Ofen nach Anspruch 7, wobei jeder der Schlackenrückhalter, die die im Wesentlichen ähnlichen mikrogemusterten Gruppen umfassen, durch kapazitives Entladungsschweißen an die Heizplatte geschweißt ist.

9. Ofen nach Anspruch 7, wobei mindestens zwei Gruppen von Schlackenrückhaltern unterschiedliche Mikromuster aufweisen.

## Revendications

1. Paroi latérale de four (125) comprenant :
une plaque chauffante (200) ayant une surface interne (210) conçue de manière à être orientée vers un volume intérieur (135) d'un four métallurgique (100) et une surface inférieure conçue de manière à être orientée vers une sole (115) du four métallurgique ; et
une pluralité d'éléments de retenue de laitier (240) s'étendant vers l'intérieur depuis la surface interne de la plaque chauffante, la pluralité d'éléments de retenue de laitier étant agencés en un macro-motif (400) de groupes d'éléments de retenue de laitier (405), les groupes d'éléments de retenue de laitier comprenant au moins deux ou plus d'éléments de retenue de laitier agencés en un micro-motif, chaque élément de retenue de laitier d'un groupe commun d'éléments de retenue de laitier comprenant le micro-motif est un goujon rectangulaire en acier soudé à la surface interne de la plaque chauffante, les goujons rectangulaires en acier du groupe commun d'éléments de retenue de laitier étant espacés l'un de l'autre et définissant des espaces entre eux, au moins deux des goujons rectangulaires en acier du groupe commun d'éléments de retenue de laitier ayant des orientations différentes, dans lequel les espaces définis entre les goujons rectangulaires en acier du groupe commun d'éléments de retenue de laitier sont plus petits qu'une distance entre des groupes adjacents d'éléments de retenue de laitier, dans lequel chaque groupe d'éléments de retenue de laitier (405) comprend deux goujons rectangulaires en acier latéraux (410) et un goujon rectangulaire en acier inférieur (415) agencés en forme de coupelle ou de fer à cheval ouvert vers le haut de la paroi latérale du four (125), dans lequel chaque goujon rectangulaire en acier latéral (410) comporte une surface principale orientée en diagonale et le goujon rectangulaire en acier inférieur (415) comporte une surface principale coplanaire avec un axe horizontal et une ouverture en forme d'entonnoir (425) est prévue entre les goujons rectangulaires en acier latéraux (410) de chaque groupe.

2. Paroi latérale selon la revendication 1, dans laquelle un espace (335) est prévu entre chacun des éléments de retenue de laitier comprenant le micro-motif.

3. Paroi latérale selon la revendication 1, comprenant en outre :
une plaque de recouvrement (205) accouplée à la plaque chauffante (200) dans un rapport d'espacement ; et
plusieurs buses de pulvérisation (225) disposées dans un volume défini entre la plaque de recouvrement et la plaque chauffante, les buses de pulvérisation étant orientées de manière à pulvériser du liquide sur la plaque chauffante.

4. Paroi latérale de four (125) comprenant :
une plaque chauffante en acier en forme d'anneau (200) ayant une surface interne (210) orientée vers l'intérieur ; et
une pluralité d'éléments de retenue de laitier (240) soudés à la surface interne de la plaque chauffante, les éléments de retenue de laitier faisant saillie vers l'intérieur depuis la surface interne, la pluralité d'éléments de retenue de laitier étant agencés en un motif de groupes discrets d'éléments de retenue de laitier (405), les groupes d'éléments de retenue de laitier ayant un micro-motif sensiblement similaire composé d'au moins deux éléments de retenue de laitier espacés de la pluralité d'éléments de retenue de laitier, les deux éléments de retenue de laitier espacés sont chacun un goujon rectangulaire en acier ayant des orientations géométriques différentes, les deux goujons rectangulaires en acier espacés du groupe commun d'éléments de retenue de laitier définissant un espace entre eux qui est plus petit qu'une distance entre les groupes adjacents d'éléments de retenue de laitier, dans lequel chaque groupe d'éléments de retenue de laitier (405) comprend deux goujons rectangulaires en acier latéraux (410) et un goujon rectangulaire en acier inférieur (415) agencés en forme de coupelle ou de fer à cheval ouvert vers le haut de la paroi latérale du four (125), dans lequel chaque goujon rectangulaire en acier latéral (410) comporte une surface principale orientée en diagonale et le goujon rectangulaire en acier inférieur (415) comporte une surface principale coplanaire avec un axe horizontal et une ouverture en forme d'entonnoir (425) est prévue entre les goujons rectangulaires en acier latéraux (410) de chaque groupe.

5. Paroi latérale selon la revendication 4, comprenant en outre :
un autre groupe d'éléments de retenue de laitier ayant un micro-motif différent du micro-motif d'éléments de retenue de laitier comprenant le motif de groupes discrets d'éléments de retenue de laitier.

6. Paroi latérale selon la revendication 4, où chacun des éléments de retenue de laitier comprenant le micro-motif est soudé par décharge capacitive à la plaque chauffante.

7. Four métallurgique (100) comprenant :
une sole (115) ; et
une paroi latérale (125) disposée sur la sole et entourant un volume intérieur (135) du four métallurgique, la paroi latérale comprenant :
une plaque chauffante (200) ayant une surface intérieure (210) orientée vers le volume intérieur ;
une plaque de recouvrement (205) entourant la plaque chauffante dans un rapport d'espacement ;
plusieurs buses de pulvérisation (225) disposées dans un volume défini entre la plaque de recouvrement et la plaque chauffante, les buses de pulvérisation étant orientées de manière à pulvériser un liquide sur la plaque chauffante ; et
une pluralité d'éléments de retenue de laitier (240) soudés à la surface interne de la plaque chauffante, les éléments de retenue de laitier faisant saillie vers l'intérieur depuis la surface interne, la pluralité d'éléments de retenue de laitier étant agencés en un motif de groupes discrets d'éléments de retenue de laitier (405), au moins deux des groupes d'éléments de retenue de laitier ayant un micro-motif sensiblement similaire composé d'au moins deux éléments de retenue de laitier espacés de la pluralité d'éléments de retenue de laitier, les deux éléments de retenue de laitier espacés sont chacun un goujon rectangulaire en acier ayant des orientations géométriques différentes, les deux goujons rectangulaires en acier espacés du groupe commun d'éléments de retenue de laitier définissant un espace entre eux qui est plus petit qu'une distance entre les groupes adjacents d'éléments de retenue de laitier, dans lequel chaque groupe d'éléments de retenue de laitier (405) comprend deux goujons rectangulaires en acier latéraux (410) et un goujon rectangulaire en acier inférieur (415) agencés en forme de coupelle ou de fer à cheval ouvert vers le haut de la paroi latérale (125), dans lequel chaque goujon rectangulaire en acier latéral (410) comporte une surface principale orientée en diagonale et le goujon rectangulaire en acier inférieur (415) comporte une surface principale coplanaire avec un axe horizontal et une ouverture en forme d'entonnoir (425) est prévue entre les goujons rectangulaires en acier latéraux (410) de chaque groupe.

8. Four selon la revendication 7, où chacun des éléments de retenue de laitier comprenant des groupes de micro-motifs sensiblement similaires est soudé par décharge capacitive à la plaque chauffante.

9. Four selon la revendication 7, dans lequel au moins deux groupes d'éléments de retenue de laitier ont des micro-motifs différents.
